# EUROPEAN PATENT APPLICATION

(11) **EP 4 071 684 A1**
(43) Date of publication of application: **12.10.2022**
(21) Application number: 22166803.1
(22) Date of filing: 05.04.2022
(51) Int. Cl.: G06Q 10/08

(54) **WAREHOUSE MONITORING SYSTEM**

(30) Priority: 06.04.2021 GB 202104878
(71) Applicant: TVS Supply Chain Solutions Ltd, Chorley, Lancashire PR6 7AJ (GB)
(72) Inventor: Buchanan, Bill, Chorley, PR6 7AJ (GB); Thornton, Adam, Chorley, PR6 7AJ (GB); Jones, Andrew, Chorley, PR6 7AJ (GB); Whiteley, Simon, Chorley, PR6 7AJ (GB)
(74) Representative: Marks & Clerk LLP

(57) **Abstract**

There is described a method for monitoring a warehouse comprising: scanning, by an aerial vehicle comprising a camera, an area of interest of the warehouse, wherein scanning comprises a fly past of the area of interest and capturing, using the camera, video data of the area of interest; receiving, at a video processing system, the captured video data; processing, by the video processing system, the captured video data to identify a video frame depicting a location of interest; classifying, by the video processing system, the location of interest based upon the identified video frame; and outputting, by the video processing system, data comprising the classification of the location of interest.

## Description

### Technical Field

The present invention relates to a warehouse monitoring system and corresponding methods and apparatus.

### Background

Warehouses require routine inspections to determine that any stock stored in the warehouse has been stored correctly, at the right location, has not been damaged, no unexpected materials are present and to identify any potential hazards amongst other considerations. Such inspections are typically carried out manually. This is a time consuming and dangerous process, in particular for large warehouses where racking may run up to 10m in height with heavy loads stored on the racking and heavy lifting equipment may be required to carry out such inspections. Thus, there is a need for a safer and more efficient system for carrying out inspections and monitoring of a warehouse.

### Summary

In general, there is provided a system and corresponding methods for monitoring a warehouse. The system comprises an aerial vehicle for scanning an area of interest of the warehouse and capturing video data. The system further comprises a video processing system for processing the captured video data.

According to a first aspect, there is provided a method for monitoring a warehouse comprising scanning, by an aerial vehicle comprising a camera, an area of interest of the warehouse. The scanning comprises a fly past of the area of interest and capturing, using the camera, video data of the area of interest. The method further comprises receiving, at a video processing system, the captured video data; processing, by the video processing system, the captured video data to identify a video frame depicting a location of interest; classifying, by the video processing system, the location of interest based upon the identified video frame; and outputting, by the video processing system, data comprising the classification of the location of interest.

The described method provides a safe and efficient way of carrying out inspections of a warehouse. The method may be implemented using off-the-shelf consumer hardware, such as an off-the-shelf drone, custom-built hardware is not required. As such, the hardware cost and the complexity of the system is kept low. The invention thus provides a holistic system for monitoring a warehouse that is highly efficient, safe and of low cost and complexity. By capturing video data using the aerial vehicle and processing the video data on a separate video processing system, the method can ensure that at least one good shot of the particular location of interest can be obtained consistently by the aerial vehicle without requiring complex detection and control algorithms to operate on the aerial vehicle which can be compute intensive and can quickly drain the battery on the aerial vehicle.

Processing the captured video data to identify a video frame depicting a location of interest may comprise determining that a landmark appears in a pre-determined position in the video frame. The landmark may be a QR code. Processing the captured video data may further comprise cropping the video frame based upon the position of the landmark in the video frame. Identifying a video frame based upon a position of a landmark ensures that consistent video frames having the most relevant information are selected as input to a classifier in order to improve classification performance. The classifier can focus on capturing the information most relevant for distinguishing between class types can ignore irrelevant variations due to inconsistency in captured frames. This reduces the training time and complexity of the classifier.

Classifying may comprise determining a type of object present in the location of interest. The classification may include a count of the number of objects of each type. Classifying may be further based upon a comparison between a video frame identified for the location of interest at a previous point in time and the currently identified video frame for the location of interest. Classifying may comprise determining the presence of an anomaly. Determining the presence of an anomaly may be further based upon a comparison of detected objects to inventory data. For example, the anomaly may be the presence of an unexpected object, that an object is missing, that there are fewer objects than expected, that an object is damaged, that a box is open or any other appropriate type of anomaly.

Classifying may comprise processing the identified video frame using a neural network classifier to generate the classification. For example, the neural network classifier may be based upon a deep residual network architecture.

As noted above, the aerial vehicle may be a drone. The aerial vehicle may be programmed to operate autonomously and to autonomously perform the scanning of the area of interest. The aerial vehicle may be configured to maintain a pre-determined distance from a target object when scanning the area of interest. The aerial vehicle may be initially positioned within a pre-determined distance from the area of interest or a target object within the area of interest prior to starting the scan of the area of interest. For example, the aerial vehicle may be placed such that the sensors have visibility of the target object and can immediately fly toward the target object. In this way, the need for complex navigational and planning routines to operate on the aerial vehicle is avoided. Such routines can introduce heavy computational requirements on aerial vehicles which may have limited battery life. Thus, the operating time of the aerial vehicle may be extended whilst still allowing for autonomous operation by the aerial vehicle itself. In addition, as the aerial vehicle is operating in an indoor environment, location sensors such as GPS may not be available and the above allows for a simple way of navigating indoors in the absence of GPS location data and without the need for mapping of the warehouse. Thus, given the low resource requirements, it is possible to use off-the-shelf consumer hardware such as a consumer-type drone in connection with the warehouse monitoring system. As such, the hardware cost of the warehouse monitoring system can be significantly lower than any custom-built specialised systems.

The target object may be a storage rack in the warehouse. The location of interest may be a shelf space on a storage rack. The aerial vehicle may be configured to return to a charging station upon completion of the fly past or to return an initial starting location from which the aerial vehicle took off.

The aerial vehicle may comprise navigational sensors distinct from the camera. For example, the navigational sensors may include gyroscopes, accelerometers, magnetometers, sonar, laser rangefinders, ultrasonic sensors, infrared sensors and other sensors as appropriate. Thus, the camera may be dedicated to capturing video data during the scan of the area of interest for processing by the video processing system.

The output data may further comprise the identified video frame. The output data may also comprise an identifier of the location of interest. For example, the QR code may be the identifier or the QR code may be decoded to provide the identifier as an alphanumeric value.

The method may further comprise generating, by the video processing system, instructions for displaying a user interface. The user interface may be configured to display the classification and the identified video frame. The method may further comprise determining, by the video processing system, a location in the identified video frame associated with the classification. The user interface may be configured to provide an indication of the determined location on the identified video frame. For example, should an unexpected object be detected in the identified video frame, a bounding box may be drawn around the detected object to highlight to the user the unexpected object.

The user interface may be configured to render the currently identified video frame over the previously identified video frame or vice versa, and the user interface comprises a slider configured to remove a portion of the top video frame to reveal a corresponding portion of the bottom video frame. As the identification of video frames described above produces consistent video frames for different scans, it is possible to provide such an overlay and a user is able to easily compare the video frames taken at different points in time to identify any changes.

The method may further comprise providing, by the video processing system, an alert in response to the detection of an anomaly.

The video processing system may be a continuous learning system. That is, the classifications output by the video processing system may be reviewed and the classifier fine-tuned if the classification is incorrect. The video processing system may be integrated with a warehouse management system. The classification may be compared to data obtained from the warehouse management system and if different, may be automatically flagged for review.

According to another aspect, there is provided a computer program product comprising processor readable instructions that when executed cause an aerial vehicle comprising a camera and a video processing system to carry out the above method aspect. There is also provided a non-transitory computer readable medium comprising processor readable instructions that when executed cause an aerial vehicle comprising a camera and a video processing system to carry out the above method aspect.

According to a further aspect, there is provided a warehouse monitoring system comprising an aerial vehicle comprising a camera; and a video processing system; wherein the aerial vehicle and video processing system are configured to carry out the above method aspect.

Aspects of the invention can be combined and it will be readily appreciated that features described in the context of one aspect of the invention can be combined with other aspects of the invention.

It will be appreciated that aspects of the invention can be implemented in any convenient form. For example, the invention may be implemented by appropriate computer programs which may be carried on appropriate carrier media which may be tangible carrier media (e.g. disks) or intangible carrier media (e.g. communications signals). Aspects of the invention may also be implemented using suitable apparatus which may take the form of programmable computers running computer programs arranged to implement the invention.

### Brief Description of the Drawings

Embodiments of the invention will now be described, by way of example, with reference to the accompanying drawings, in which:
Figure 1 is a schematic illustration of a warehouse monitoring system;
Figure 2 is a schematic illustration of a part of a warehouse with an area of interest;
Figure 3 is a schematic illustration of an aerial vehicle of the warehouse monitoring system performing a scan of an area of interest;
Figure 4 is a schematic illustration of a location of interest in the warehouse;
Figure 5 is a schematic illustration of a display of a user interface;
Figure 6 is a schematic illustration of a video processing system of the warehouse monitoring system;
Figure 7 is a flowchart showing processing for carrying out monitoring of a warehouse.

### Detailed Description

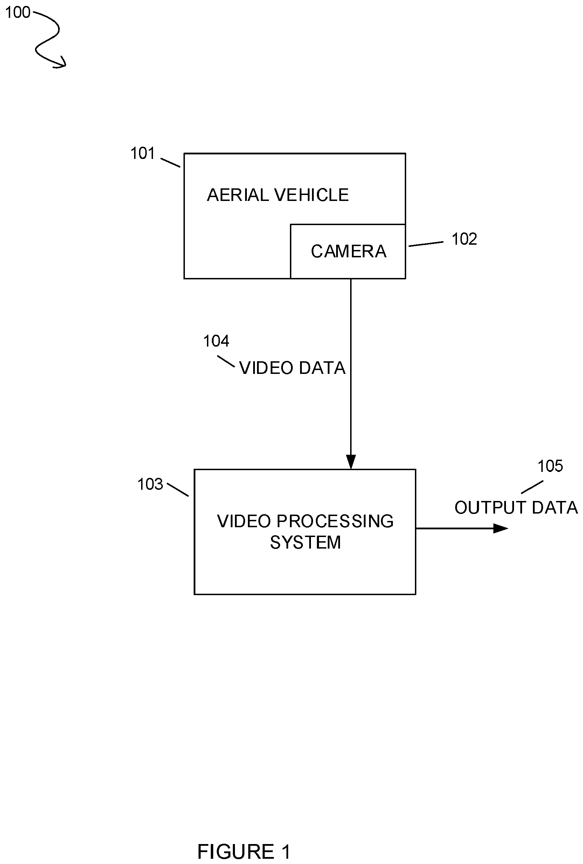

Referring to Figure 1, there is shown a warehouse monitoring system 100 comprising an aerial vehicle 101 which comprises a camera 102, and a video processing system 103. The camera 102 may be a built-in component of the aerial vehicle 101 or the camera 102 may be a separate component externally mounted to the aerial vehicle 101. The aerial vehicle 101 is configured to scan an area of interest of the warehouse autonomously. For example, the aerial vehicle 101 may be configured to fly past the area of interest. During the fly past, video data of the area of interest may be captured using the camera 102.

The video processing system 103 is configured to receive the captured video data 104. The video processing system 103 may be a server and the video data may be transmitted to the video processing system 103 automatically from the aerial vehicle 101 or camera 102 via a wireless network, for example, over Wi-Fi or a cellular network or other appropriate communications network. Alternatively, the captured video data 104 may be stored on an appropriate data storage medium on the aerial vehicle 101 or camera 102, such as an SD card, and manually uploaded to the video processing system 103. In another example, rather than being an external computing system, the video processing system 103 may be an internal component of the aerial vehicle 101.

The video processing system 103 is further configured to process the captured video data 104 to identify a video frame depicting a location of interest as described in further detail below. The video processing system 103 is also configured to classify the location of interest based upon the identified video frame and to output data 105 comprising the classification. The output data 105 may further comprise the identified video frame and may also comprise an identifier of the location of interest. The capture of the video data by the aerial vehicle 101 and the processing of the video data 104 by the video processing system 103 may be performed separately. Alternatively, depending on the capabilities of the aerial vehicle, the video data may be transmitted to the video processing system for processing in real-time or the video data may be processed in real-time by the aerial vehicle itself if the video processing system is present on the aerial vehicle.

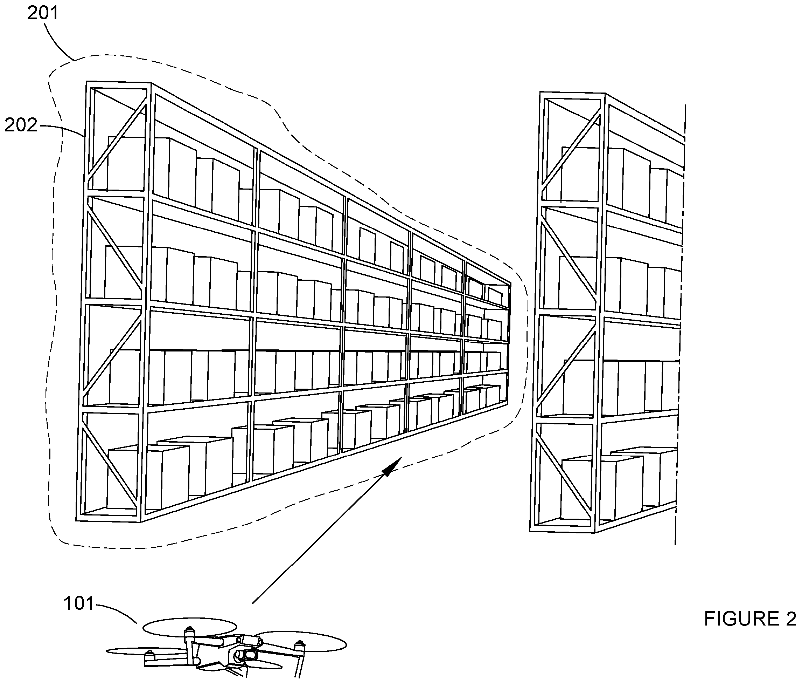

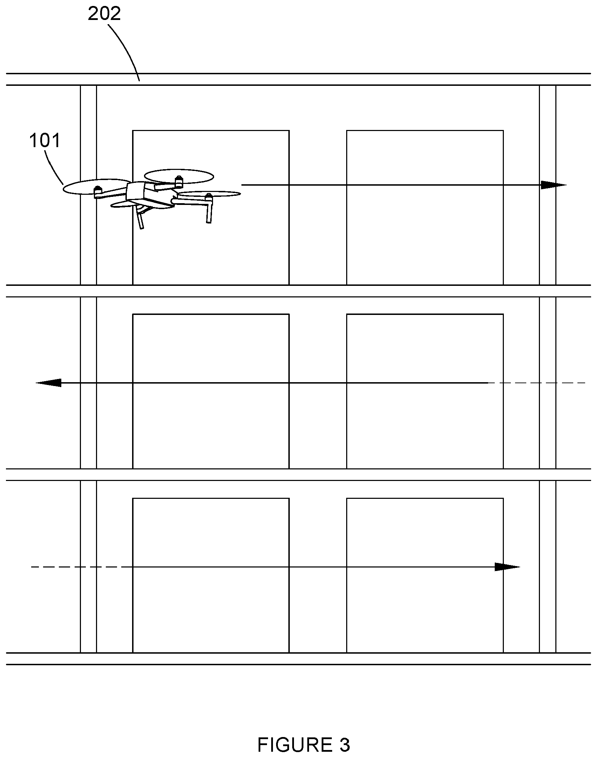

Referring to Figure 2, a part of the warehouse is shown with an area of interest 201 highlighted. Within the area of interest 201 may be a target object 202, in this case a storage rack. When scanning the area of interest 201, the aerial vehicle 101 may be configured to fly in a particular scan pattern to capture video data of the target object 202. For example, as shown in Figure 3, the aerial vehicle 101 may be configured to fly horizontally across a storage rack, row by row. The aerial vehicle 101 may be configured to maintain a pre-determined distance from the target object 202 when performing the scan. For example, the aerial vehicle 101 may be configured to maintain a distance of at least 1.3m from the storage rack to provide a clear and in-focus shot of the storage rack with the camera 102. Other distances and scan patterns may be used in accordance with the particular capabilities of the aerial vehicle 101 and camera 102 and the properties of the target object 202.

The aerial vehicle 101 may further comprise sensors for navigation and flight control such as gyroscopes, accelerometers, magnetometers, sonar, laser rangefinders, ultrasonic sensors, infrared sensors and other sensors as appropriate. The camera 102 may be dedicated to capturing video data for processing by the video processing system 103. As such, the camera 102 may not necessarily be used for controlling the flight of the aerial vehicle 101. Alternatively, if the aerial vehicle comprises a computer vision-based navigational system, the camera 102 may also be used for such purposes.

The aerial vehicle 101 may also be initially positioned within a pre-determined distance from the area of interest 201 or target object 202 such that the aerial vehicle can easily locate the area of interest 201 and target object 202. The aerial vehicle 101 may be placed such that the sensors have visibility of the target object 202 and can immediately fly toward the target object 202. For example, the aerial vehicle 101 may detect an open passageway between two large obstacles. The aerial vehicle 101 may determine that the open passageway is an aisle in between two storage racks and may proceed to fly through the centre of the aisle to begin scanning one of the storage racks.

In this way, the need for complex navigational and planning routines to operate on the aerial vehicle 101 is avoided. Such routines can introduce heavy computational requirements on aerial vehicles which may have limited battery life. Thus, the operating time of the aerial vehicle 101 may be extended whilst still allowing for autonomous operation by the aerial vehicle itself. In addition, as the aerial vehicle 101 is operating in an indoor environment, location sensors such as GPS may not be available and the above allows for a simple way of navigating indoors in the absence of GPS location data and without the need for mapping of the warehouse. Thus, given the low resource requirements, it is possible to use off-the-shelf consumer hardware such as a consumer-type drone in connection with the warehouse monitoring system. As such, the hardware cost of the warehouse monitoring system can be significantly lower than any custom-built specialised systems. As an example, a suitable aerial vehicle may be a Mavic 2 Enterprise manufactured by SZ DJI Technology Co. Ltd, Shenzhen, China. An off-the-shelf aerial vehicle, such as the aforementioned example, may be programmed through its built-in application programming interface.

The size of the area of interest 201 may be also be based upon the battery capacity of the aerial vehicle 101. For example, a single charge may enable the aerial vehicle 101 to scan a storage rack 202 of length 60m and eight shelf spaces high in approximately 15 minutes. When the scanning is complete, the aerial vehicle may be configured to return to its initial starting location from which it took off or to return to a charging station to recharge its battery ready for scanning another area of interest. The charging station may also be configured to upload any captured video data 104 to the video processing system 103. It will be appreciated that the aerial vehicle may comprise an alternative power source to a battery as deemed appropriate by a person skilled in the art.

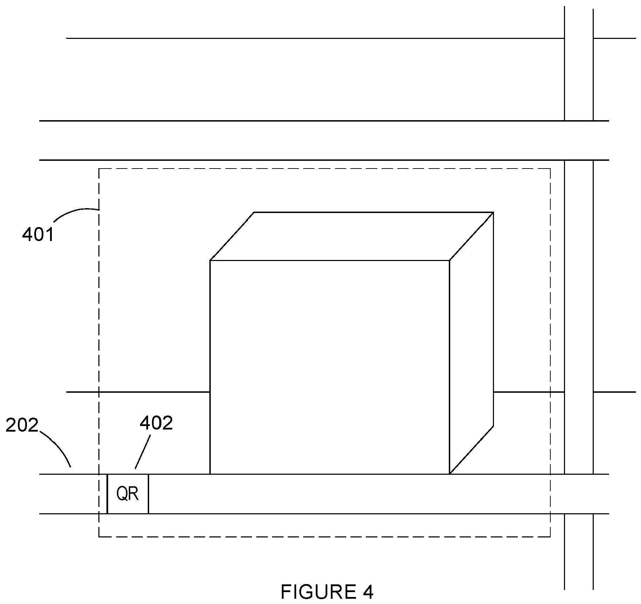

As noted above, the video processing system 103 is configured to receive the captured video data 104 and to the process the captured video data 104 to identify a video frame depicting a location of interest. For example, as shown in Figure 4, a location of interest may be a shelf space 401 on a storage rack 202. Processing the captured video data 104 to identify a video frame depicting a location of interest 401 may comprise determining that a landmark appears in a pre-determined position in the video frame. For example, a QR code 402 may be placed on the storage rack to identify the particular shelf space location as shown in Figure 4. As such, the QR code 402 may function as an identifier of the location. The QR code 402 may be used as a landmark for identifying a video frame depicting the location of interest 401. For example, the video processing system may process each captured video frame and select a video frame having the landmark appearing in a pre-determined position of the video frame or is the closest to the pre-determined position. For instance, the pre-determined position may be a set of image co-ordinates in the bottom left region of the video frame. This ensures that consistent video frames having the most relevant information are selected as input to a classifier in order to improve classification performance. The classifier can focus on capturing the information most relevant for distinguishing between class types can ignore irrelevant variations due to inconsistency in captured frames. This reduces the training time and complexity of the classifier.

The video frame may also be cropped based upon the position of the landmark, for example, a bounding box for cropping the video frame may be set relative to the position of the landmark. Again, this ensures that consistent video frames containing the most relevant information are provided as input to the classifier.

It will be appreciated that landmarks and location identifiers other than QR codes may be used. For example, the shelving or frame on the storage rack may be of a particular distinctive colour and markings that enables recognition and identification of a shelf space.

The video processing system 103 is configured to classify the location of interest 401 based upon the identified video frame as noted above. The classification may comprise determining a type of object that is present in the location of interest 401, for example, a particular product that is stored in the location of interest 401 or that a particular location is empty. The classification may also comprise a count of the number of detected objects. The classification may further comprise determining the presence of an anomaly, which may be based upon a comparison of the classification to inventory data and/or a comparison between a video frame identified for the location of interest 401 at a previous point in time and the currently identified video frame for the location of interest 401. For example, the anomaly may be the presence of an unexpected object, that an object is missing, that there are fewer objects than expected, that an object is damaged, that a box is open or any other appropriate type of anomaly. The inventory data may be obtained through an interface to a warehouse management system. The comparison between a video frame identified for the location of interest 401 at a previous point in time and the currently identified video frame for the location of interest 401 may comprise determining a measure of similarity between the two video frames. Areas of the video frames where the measured similarity is above a particular threshold value may be detected as a change and used for determining what type of change has occurred and/or whether an anomaly is present.

The classification may be performed using a neural network. For example, the identified video frame may be provided as an input to the neural network. The neural processes the identified video frame to determine a classification of the location of interest. The classification may be a set of scores representing the likelihood that each of a set of object types or anomalies are present in the identified video frame of the location of interest. Alternatively, the classification output may be an indication of a single class or a plurality of classes. For example, the highest scoring class may be provided as the classification or the scores may be compared to a threshold value and any classes with scores greater than the threshold may be provided as the classification. In addition to the current identified video frame, one or more previously identified video frames captured at previous points in time may also be input to the neural network for processing and determining the classification of the location of interest for the current point in time.

The neural network may be a convolutional neural network or may be a type of neural network that comprises convolutional layers such as a deep residual network. In one example, the neural network classifier is based upon a ResNet-50 architecture. Further details of the ResNet-50 architecture may be found in He et al., "Deep residual learning for image recognition." In Proceedings of the IEEE conference on computer vision and pattern recognition, pp. 770-778. 2016, which is hereby incorporated by reference in its entirety. The neural network classifier may be trained using a labelled training dataset using supervised learning based upon a classification loss function and using stochastic gradient descent or other suitable technique as deemed appropriate by a person skilled in the art. In one example, the training dataset comprises 1200 labelled images. The training dataset may be compiled through sample scans using the aerial vehicle to obtain example images of each class.

As noted above, the video processing system 103 is configured to provide output data 105 comprising the classification of the location interest. The output data 105 may also comprise the identified video frame. The output data 105 may also comprise an identifier of the location of interest. For example, the QR code 402 may be decoded to provide a text representation of the location identifier. The video processing system 103 may also be configured to provide an alert when an anomaly is detected such that a user can then take action as necessary.

The video processing system 103 may also be integrated with a warehouse management system. As noted above, the classification determined by the video processing system 103 may be compared to data from the warehouse management system. The data from the warehouse management system may be retrieved based upon a location identifier for the location of interest. Should there be a difference between the classification determined by the video processing system 103 and the data obtained from the warehouse management system, the video processing system 103 may flag the classification for human review. In this regard, the video processing system 103 may provide the classification, the identified video frame and the corresponding warehouse management system data for review. If it is determined that the classification is incorrect, the reviewer may provide a corrected classification. The classifier of the video processing system 103 may then be fine-tuned based upon the provided corrected classification. For example, the parameters of the classifier may be adjusted using the same parameter update technique, as used in the initial training of the classifier, based upon the corrected classification and identified video frame as the new training input. Alternatively, only a subset of the parameters of the classifier may be selected for updating, such as the parameters of specific layers of a neural network classifier. By fine-tuning the classifier, the video processing system 103 continues to learn in use. As such, the video processing system 103 may be considered to be a continuous learning system. The warehouse management system may be any suitable system ranging from an Excel spreadsheet at its simplest to a large-scale Enterprise Resource Planning system.

The video processing system 103 may be further configured to provide instructions for displaying a user interface. The instructions may be transmitted for displaying the user interface on a remote client device or the user interface may displayed locally. The user interface may be configured to display the classification, identifier of the location of interest and the identified video frame. Thus, the output data 105 may be provided as part of the instructions for displaying the user interface. The video processing system 103 may be further configured to determine a location in the identified video frame associated with the classification and the user interface may be configured to provide an indication of the determined location on the identified video frame. For example, should an unexpected object be detected in the identified video frame, a bounding box may be drawn around the detected object to highlight to the user the unexpected object.

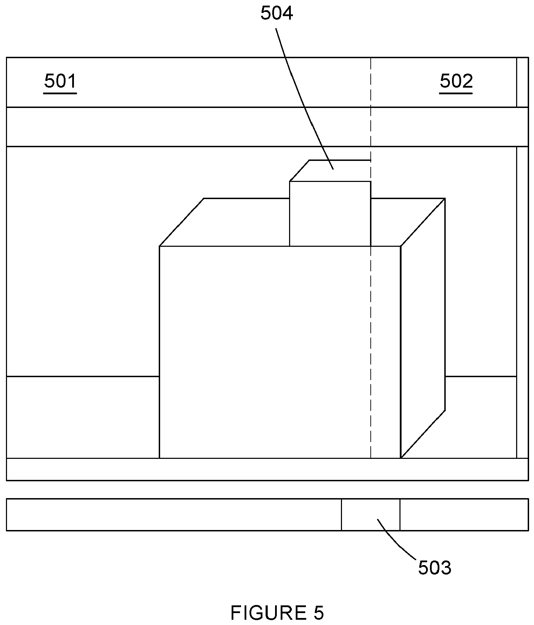

As shown in Figure 5, the user interface may be configured to render the currently identified video frame 501 over a previously identified video frame 502 (or vice versa), such that the bottom video frame is hidden from view by the top video frame. A slider 503 may be configured to remove a portion of the top video frame 501 to reveal a corresponding portion of the bottom video frame 502. As the identification of video frames described above produces consistent video frames for different scans, it is possible to provide such an overlay and a user is able to easily compare the video frames taken a different points in time. For example, in Figure 5, it can be seen that an additional unexpected object 504 is present in the current identified video frame 501 but not in the previously identified video frame 502.

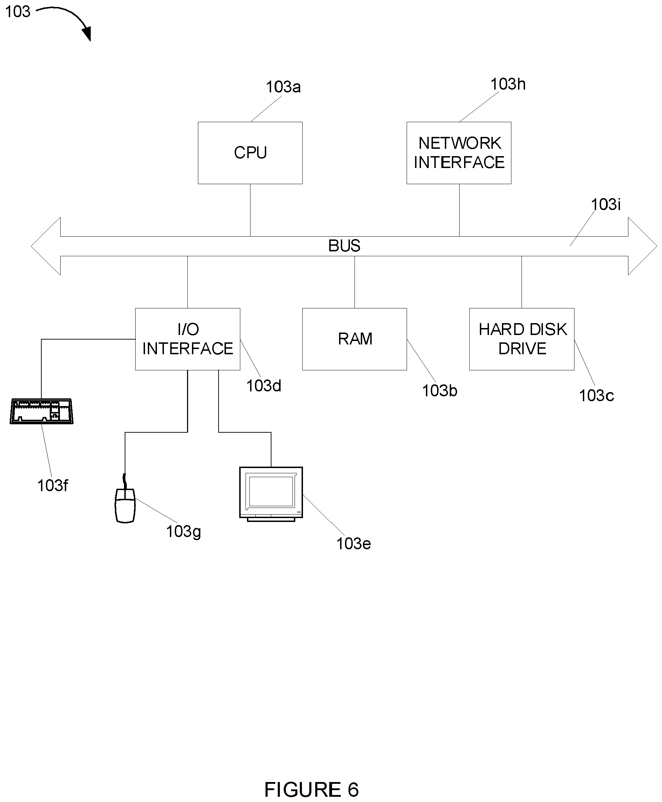

Figure 6 shows the video processing system 103 of Figure 1 in further detail. It can be seen that the video processing system 103 comprises a CPU 103a which is configured to read and execute instructions stored in a volatile memory 103b which takes the form of a random access memory. The volatile memory 103b stores instructions for execution by the CPU 103a and data used by those instructions. For example, in use, received captured video data 104 may be stored in volatile memory 103b whilst it is processed.

The video processing system 103 further comprises non-volatile storage in the form of a hard disc drive 103c. The video processing system 103 further comprises an I/O interface 103d to which are connected peripheral devices used in connection with the video processing system 103. More particularly, a display 103e may be configured so as to display output from the video processing system 103. Input devices may also be connected to the I/O interface 103d. Such input devices may include a keyboard 103f and a mouse 103g which allow local interaction with the video processing system 103.

A network interface 103h allows the video processing system 103 to be connected to an appropriate computer network so as to receive and transmit data from and to other computing devices and for remote access to the video processing system 103. The CPU 103a, volatile memory 103b, hard disc drive 103c, I/O interface 103d, and network interface 103h, are connected together by a bus 103i.

It will be appreciated that the aerial vehicle 101 may comprise an on-board controller for controlling the operations of the aerial vehicle 101, such as flight control, control of sensors, control of the camera 102 etc. The controller may have a similar form that of the video processing system 103 in Figure 6. For example, the controller may comprise a CPU, volatile memory, non-volatile memory, an I/O interface and a network interface connected together by a bus.

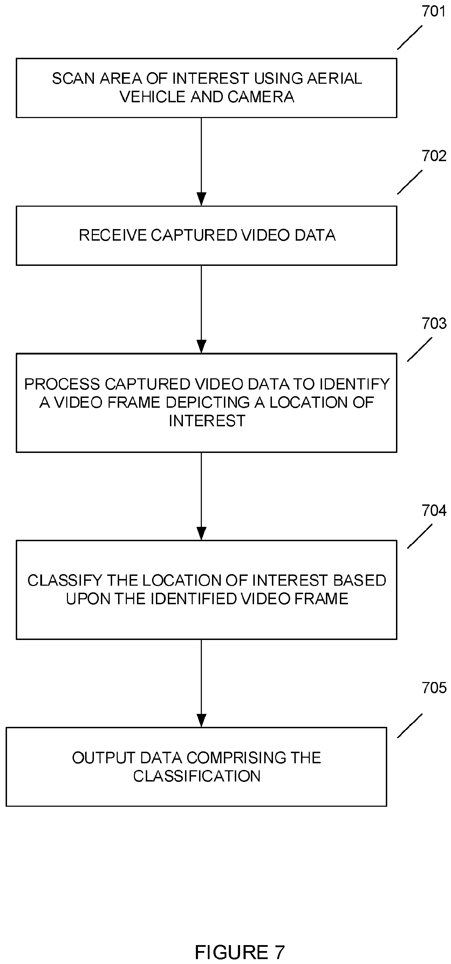

Referring now to Figure 7, processing for monitoring of a warehouse will now be described. It will be appreciated that the processing may be implemented using the warehouse monitoring system of Figure 1. At block 701, an area of interest of the warehouse is scanned by an aerial vehicle comprising a camera. The scanning comprises a fly past of the area of interest and capturing video data of the area of interest using the camera. The aerial vehicle may be programmed to perform the scan autonomously. As discussed above, the aerial vehicle may scan the area of interest based upon a particular flight pattern to capture video data of a target object in the area of interest.

At block 702, the captured video data is received at a video processing system. As discussed above, this video data may be transmitted automatically from the aerial vehicle or camera or may be manually uploaded to the video processing system if the captured video data is recorded to a data storage medium, such as an SD card, on the aerial vehicle.

At block 703, the video processing system processes the captured video data to identify a video frame depicting a location of interest. As discussed above, the location of interest may be a shelf space on a storage rack in the warehouses. The location of interest may be identified by a landmark such as a QR code and the processing may comprise determining that the landmark appears in a pre-determined position in the video frame.

At block 704, the video processing system classifies the location of interest based upon the identified video frame. As discussed above, the classification may be performed using a neural network classifier. The classification may include determining the type of object present in the location of interest and/or whether any anomalies are present.

At block 705, the video processing system outputs data comprising the classification and an identifier of the location of interest. For example, the identifier may an identifier of a particular shelf space. The output data may further comprise the identified video frame and instructions for displaying a user interface to display the output data.

Although specific embodiments of the invention have been described above, it will be appreciated that various modifications can be made to the described embodiments without departing from the spirit and scope of the present invention. That is, the described embodiments are to be considered in all respects exemplary and nonlimiting. In particular, where a particular form has been described for particular processing, it will be appreciated that such processing may be carried out in any suitable form arranged to provide suitable output data.

## Claims

1. A method for monitoring a warehouse comprising:
scanning, by an aerial vehicle comprising a camera, an area of interest of the warehouse, wherein scanning comprises a fly past of the area of interest and capturing, using the camera, video data of the area of interest;
receiving, at a video processing system, the captured video data;
processing, by the video processing system, the captured video data to identify a video frame depicting a location of interest;
classifying, by the video processing system, the location of interest based upon the identified video frame; and
outputting, by the video processing system, data comprising the classification of the location of interest.

2. The method of claim 1, wherein processing the captured video data to identify a video frame depicting a location of interest comprises determining that a landmark appears in a pre-determined position in the video frame; and optionally wherein the landmark is a QR code.

3. The method of claim 2, wherein the processing further comprises cropping the video frame based upon the position of the landmark in the video frame.

4. The method of any preceding claim, wherein classifying comprises determining a type of object present in the location of interest; and/or
wherein classifying is further based upon a comparison between a video frame identified for the location of interest at a previous point in time and the currently identified video frame for the location of interest; .

5. The method of any preceding claim, wherein classifying comprises determining the presence of an anomaly; and optionally, wherein determining the presence of an anomaly is further based upon a comparison of detected objects to inventory data.

6. The method of any preceding claim, wherein classifying comprises processing the identified video frame using a neural network classifier to generate the classification.

7. The method of any preceding claim, wherein the location of interest is a shelf space on a storage rack.

8. The method of any preceding claim, wherein the aerial vehicle is configured to maintain a pre-determined distance from a target object when scanning the area of interest; and/or
wherein the aerial vehicle is initially positioned within a pre-determined distance from the area of interest or a target object within the area of interest prior to starting the scan of the area of interest; and/or
wherein the aerial vehicle is configured to return to a charging station upon completion of the fly past or to an initial starting location from which the aerial vehicle took off.

9. The method of any preceding claim, wherein the aerial vehicle comprises navigational sensors distinct from the camera.

10. The method of any preceding claim, wherein the output data further comprises the identified video frame.

11. The method of any preceding claim, further comprising: generating, by the video processing system, instructions for displaying a user interface; and optionally, wherein the user interface is configured to display the classification and the identified video frame; and/or
wherein the method further comprises: determining, by the video processing system, a location in the identified video frame associated with the classification; and the user interface is configured to provide an indication of the determined location on the identified video frame; and/or
wherein the user interface is configured to render the currently identified video frame over the previously identified video frame or vice versa, and the user interface comprises a slider configured to remove a portion of the top video frame to reveal a corresponding portion of the bottom video frame; and/or
wherein the method further comprises: providing, by the video processing system, an alert in response to the detection of an anomaly.

12. The method of any preceding claim, wherein the video processing system is a continuous learning system.

13. The method of any preceding claim, wherein the video processing system is integrated with a warehouse management system.

14. A computer program product comprising processor readable instructions that when executed cause an aerial vehicle comprising a camera and a video processing system to carry out the method of any preceding claim.

15. A warehouse monitoring system comprising:
an aerial vehicle comprising a camera; and
a video processing system;
wherein the aerial vehicle and video processing system are configured to carry out a method according any one of claims 1 to 13.
